# EUROPÄISCHE PATENTSCHRIFT

(11) **EP 1 473 224 B1**
(45) Veröffentlichungstag und Bekanntmachung des Hinweises auf die Patenterteilung: **27.06.2007**
(21) Anmeldenummer: 04010206.3
(22) Anmeldetag: 29.04.2004
(51) Int. Cl.: B64D 9/00, B65G 39/02

(54) **Fördereinrichtung an einem Cargo-Deck eines Flugzeugs**
Transport system for an aircraft cargo deck
Dispositif de transport pour une soute à cargaison d'avion

(30) Priorität: 30.04.2003 DE 10319504
(43) Veröffentlichungstag der Anmeldung: 03.11.2004
(73) Patentinhaber: Telair International GmbH, 83714 Miesbach (DE)
(72) Erfinder: Huber, Thomas, 83727 Schliersee (DE); Holzner, Richard, 83026 Rosenheim (DE)
(74) Vertreter: Bohnenberger, Johannes

(56) Entgegenhaltungen:
- DE-A- 19 756 882
- US-A- 5 096 308
- US-A- 5 390 775

## Beschreibung

Die Erfindung betrifft eine Fördereinrichtung an einem Cargo-Deck eines Flugzeugs nach dem Oberbegriff des Patentanspruches 1.

In Flugzeugen, die ein Cargo-Deck aufweisen, sind - insbesondere beim Airbus - auf dem Cargo-Deck Rollenbahnen montiert, in welchen Rollen und Rollenantriebseinheiten (PDUs) montiert sind bzw. montiert werden können. Auf diesen Rollenbahnen können Gegenstände, insbesondere Paletten oder Container in Längsrichtung der Rollenbahn gefördert werden.

Um einen Transport der Gegenstände in einer, von der Längsrichtung der Rollenbahnen abweichenden Richtung zu ermöglichen, werden Kugelelemente auf dem Cargo-Deck montiert. Insbesondere dienen bisher hierzu Plattensegmente, in welchen die Kugelelemente eingehängt sind und die in die Rollenbahnen hängend eingeschraubt werden. Diese Anordnung ist insofern nachteilig, als ein hoher Aufwand zum Befestigen der Plattensegmente notwendig ist und die Belastbarkeit der Kugelelemente relativ niedrig ist. Darüber hinaus ergeben sich durch diese Montage auch relativ große Lücken zwischen den Segmenten.

Aus der US-A-5 390 775 ist ein derartiges Plattensegment bekannt, in welches eine Vielzahl von Kugelelementen eingebaut werden kann. Das gesamte Plattenelement ist abnehmbar am Cargo-Deck befestigt. Ein Auswechseln beschädigter Kugelelemente ist aufwändig.

Der Erfindung liegt die Aufgabe zu Grunde, eine Fördereinrichtung der eingangs genannten Art dahin gehend weiter zu bilden, dass bei einfacher Montage und Demontage eine hoch belastbare Anordnung von Kugelelementen entsteht.

Diese Aufgabe wird durch eine Fördereinrichtung nach Anspruch 1 gelöst.

Ein wesentlicher Punkt der Erfindung liegt hierbei darin, dass die Kugelelemente in Halterahmen fixiert sind, welche als getrennte Einheiten handhabbar sind und mittels Verriegelungselementen an den Rollenbahnen lösbar fixiert werden können. Dadurch ist ein einfacher Ein- und Ausbau bei hoher Dichte von Kugelelementen möglich. Dabei sind die Halterahmen mit kastenförmigen Querschnitten ausgebildet, wodurch sich eine - insbesondere gegenüber plattenförmigen Montageelementen für die Kugelelemente - besonders stabile, steife und hochbelastbare Anordnung ergibt.

Die Halterahmen sind vorzugsweise derart ausgebildet, dass die Kugelelemente in einem Deckelabschnitt der Halterahmen befestigt sind und vorzugsweise zusätzlich auf einem Boden der Halterahmen aufstehen. Dadurch ergibt sich eine gegenüber der rein hängenden Montage erheblich erhöhte Belastbarkeit der Gesamtanordnung.

Die Verriegelungselemente umfassen vorzugsweise Schnappriegel, die an den Halterahmen befestigt sind und in Eingriffsausnehmungen an den Rollenbahnen und zwar vorzugsweise an deren Seitenwangen einrastbar sind. Die Anordnung kann auch umgekehrt gewählt werden. Bei der Montage muss also nur ein Halterahmen in die Rollenbahn so tief eingesetzt werden, dass der Schnappriegel, der während des Einsetzens von den Seitenwangen der Rollenbahnen zurückgeschoben wird, einrastet und so den jeweiligen Halterahmen in der Rollenbahn verriegelt. Diese Schnappriegel sind vorzugsweise als Federstahl-Formteile ausgebildet, was eine sehr stabile und dennoch kostengünstige Fertigung ermöglicht. Diese bandförmigen Formteile werden vorzugsweise mit Nieten an den Halterahmen befestigt. Bei einer anderen bevorzugten Ausführungsform wird der Schnappriegel einstückig mit dem Halterahmen ausgebildet und z. B. durch Freifräsen aus einer Wand des Halterahmens herausgearbeitet.

Die Eingriffsausnehmungen werden vorzugsweise in Seitenwangen der Rollenbahnen angebracht, welche in vorzugsweise regelmäßigen Abständen, also in einem vorgegebenen Raster in den Rollenbahnen eingefräst sind. Dadurch kann eine sehr schnelle und wahlfreie Montage der Kugelelemente bzw. Halterahmen erfolgen.

Die Halterahmen umfassen vorzugsweise Zugangsöffnungen zum Öffnen der Schnappriegel mittels eines Werkzeugs. Derartige Zugangsöffnungen sind vorzugsweise auf der Oberseite der Halterahmen angebracht, so dass z. B. mittels eines Schraubendrehers der Schnappriegel von oben her geöffnet werden kann.

Weiterhin umfassen die Verriegelungselemente neben den, ein Herausheben der Halterahmen nach oben aus den Rollenbahnen verhindernden Schnappriegel noch Zapfen oder dergleichen Rastelemente an den Rollenbahnen, an denen die Halterahmen nach Einsetzen in die Rollenbahnen gegenüber einer Verschiebung in Oberflächenrichtung des Cargo-Decks gesichert sind. Diese Rastelemente bzw. Zapfen werden vorzugsweise in Form von Stahlstiften ausgebildet, die im Boden der Rollenbahnen eingelassen sind und in korrespondierende Ausnehmungen in den Halterahmen einsetzbar sind. Der Montageaufwand ist relativ gering, die Haltbarkeit und Belastbarkeit derartiger Rastelemente ist sehr hoch. Eine umgekehrte Anordnung ist auch möglich.

Vorzugsweise ist eine Vielzahl von Rastelementen in regelmäßigen Rasterabständen an den Rollenbahnen vorgesehen, wobei diese Rasterabstände korrespondierend zu den Rasterabständen ausgebildet sind, in welchen die Eingriffsausnehmungen in den Seitenwangen der Rollenbahnen angeordnet sind, in welche die Schnappriegel eingreifen. Beim Einsetzen der Halterahmen in die Rollenbahnen wird somit eine Verrastung aller Verriegelungselemente sichergestellt.

Vorzugsweise sind die Rollenbahn und/oder die Halterahmen als Extrusionsprofile (aus Aluminium) ausgebildet, was eine sehr stabile und kostengünstige Fertigung ermöglicht.

Bevorzugte Ausführungsformen der Erfindung ergeben sich aus den Unteransprüchen und der nachfolgenden Beschreibung eines Ausführungsbeispiels, das an Hand von Abbildungen näher erläutert wird. Hierbei zeigen
- Fig. 1 eine perspektivische Darstellung der Anordnung in unzusammengebautem Zustand,
- Fig. 2 eine Seitenansicht einer Rollenbahn,
- Fig. 3 einen Schnitt entlang der Linie III-III aus Fig. 2 durch die zusammengebaute Anordnung mit eingesetztem Werkzeug,
- Fig. 4 einen Schnitt, ähnlich dem nach Fig. 3, jedoch ohne Werkzeug,
- Fig. 5 eine Stirn-Ansicht der Rollenbahn,
- Fig. 6 eine Draufsicht auf die Anordnung nach Fig. 5 und
- Fig. 7 eine Draufsicht in Richtung des Pfeiles VII in Fig. 5 auf die Rollenbahn.

In der nachfolgenden Beschreibung werden für gleiche und gleich wirkende Teile die selben Bezugsziffern verwendet.

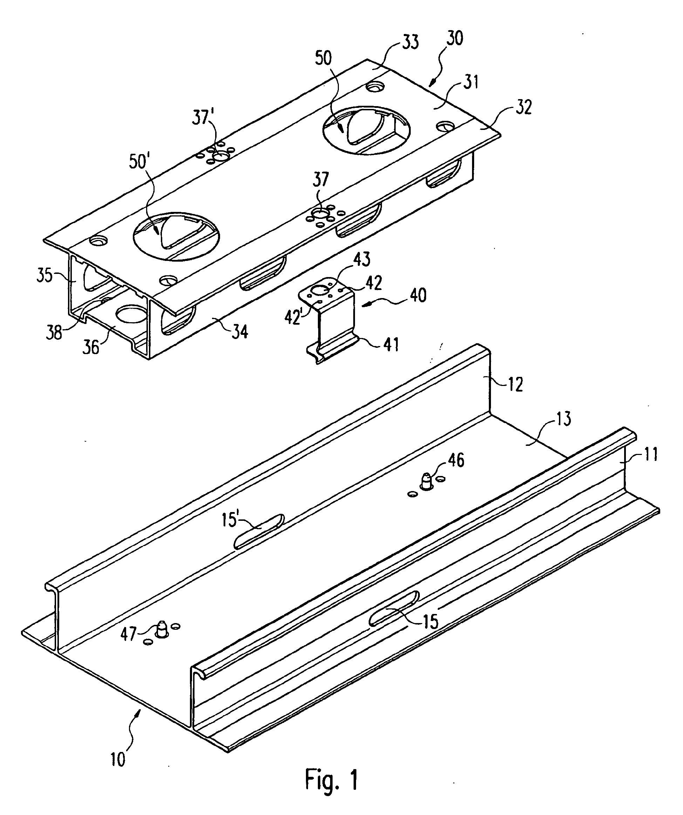

Wie aus Fig. 1 hervorgeht, umfasst die Fördereinrichtung einerseits eine Rollenbahn 10, die mit ihrem Boden 13 in an sich bekannter Weise auf dem Cargo-Deck (bzw. auf Floorbeams 2) eines Flugzeugs befestigt ist. Vom Boden 13 ragen vertikal nach oben Seitenwangen 11, 12, zwischen denen z. B. Rollen oder Rollenantriebseinheiten montierbar sind.

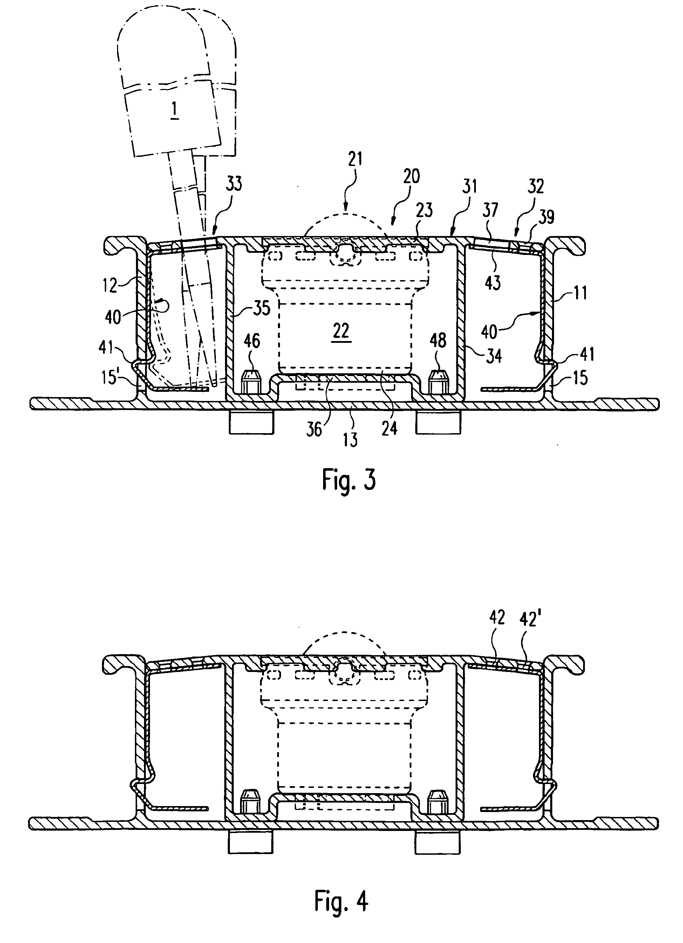

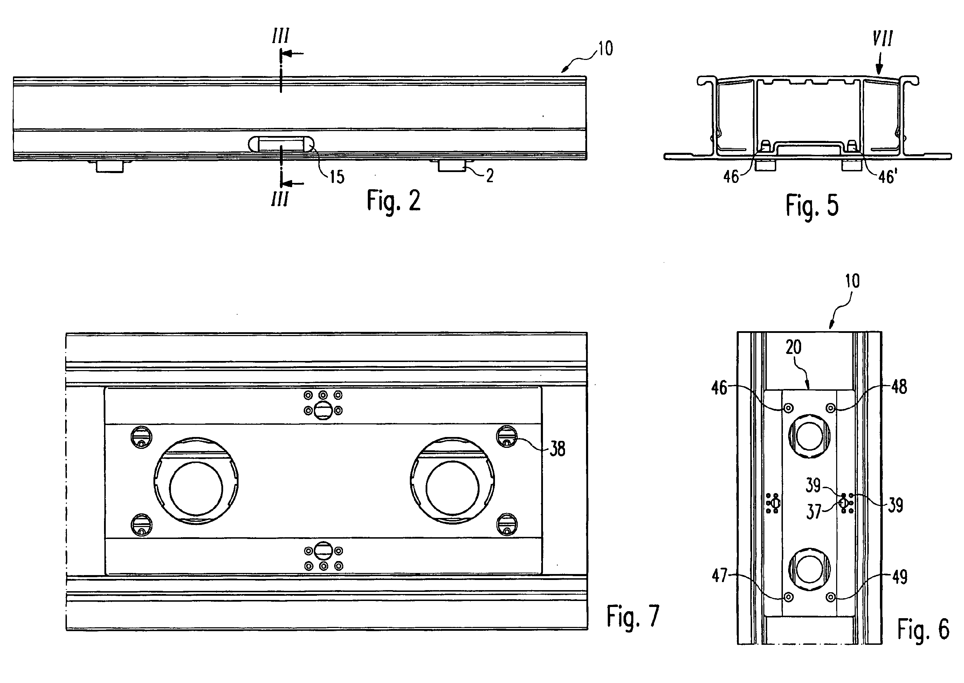

In die Rollenbahn 10 sind Halterahmen 30 einsetzbar, welche einen kastenförmigen Querschnitt (siehe insbesondere Figuren 3-5) aufweisen mit einem Boden 36, Seitenwangen 34, 35 sowie einem horizontalen, parallel zum Boden 36 angeordneten Montageabschnitt 31, an welchen nach außen hin abfallende Rampenflächen 32, 33 anschließen. Im Montageabschnitt 31 des Halterahmens 30 sind Bohrungen 50, 50' angebracht, in welche die Kugelelemente 20, 20' mit ihrem Gehäuse 22, in welchem eine Kugel 21 allseitig drehbar gelagert ist, einsteckbar sind. Das Gehäuse 22 weist einen Halteflansch 23 auf, der im Montageabschnitt 31 bzw. in der dort vorgesehenen Öffnung 50, 50' festgehalten wird. Die Höhe des Gehäuses 22 bzw. des Halterahmens 30 ist derart dimensioniert, dass das Gehäuse 22 mit einem Boden 24 auf einem Boden 36 des Halterahmens 30 und zwar in einer dort vorgesehenen und korrespondierend zum Boden 13 ausgebildeten Aufnahmeöffnung aufsitzt. Auf diese Weise ist das Kugelelement 20 mit seinem Gehäuse 21 einerseits im Montageabschnitt 31 und andererseits mit seinem Boden 24 am Boden 36 des Halterahmens 30 fixiert und über (nicht gezeigte) an sich bekannte Verriegelungseinrichtungen gesichert. Derartige Kugelelemente sind aus der DE 34 21 345 C1 oder der DE 38 054 94 A1 bekannt.

Weiterhin ist der Halterahmen 30 derart zur Rollenbahn 10 dimensioniert, dass er mit seinem Boden 36 auf dem Boden 13 der Rollenbahn 10 aufsitzt. Die Außenkontur des Halterahmens 30 ist derart dimensioniert, dass die Außenränder der Rampenflächen 32, 33 an den Innenflächen der Seitenwangen 11, 12 der Rollenbahn 10, gegenüber deren Oberrändern versenkt ansetzen, so dass einerseits Querkräfte (relativ zur Längsrichtung der Rollenbahn 10) aufgenommen werden können, andererseits aber nicht die Gefahr besteht, dass zu transportierende Gegenstände mit ihrem Boden an die Halterahmen 30 seitlich anfahren können.

An den Unterseiten der Rampenflächen 32, 33 an den Halterahmen 30 sind nach unten ragend Schnappriegel 40 befestigt, die aus Federstahl derart gebogen sind, dass Nasen 41 nach außen vorstehen. Die Dimensionierung und Formgebung ist hierbei derart, dass die Nasen 41 in Eingriffsausnehmungen 15, 15' eingreifen, wenn ein Halterahmen 30 in eine Rollenbahn 10 eingesetzt wird. Diese Eingriffsausnehmungen 15, 15' sind in den Seitenwangen 11, 12, der Rollenbahn 10 in regelmäßigen Abständen eingefräst, so dass über dieses Rastermaß Halterahmen 30 an vordefinierten Stellen der Rollenbahn 10 einsetzbar sind.

Die Schnappriegel 40 weisen an ihren Oberenden Befestigungsbohrungen 42, 42' und eine Durchgangsbohrung 43 auf, so dass sie mit entsprechend angebrachten Befestigungsbohrungen 39 bzw. Zugangsöffnungen 37, 37' in den Rampenflächen 32, 33 der Halterahmen 30 fluchten und die Schnappriegel 40 an den Halterahmen 30 angenietet werden können. Wie in Fig. 3 gezeigt, kann dann ein Werkzeug 1, insbesondere ein Schraubendreher, durch die Zugangsöffnungen 37, 37' bzw. Durchgangsbohrungen 43 so eingesetzt werden, dass man mittels des Werkzeugs den Schnappriegel 40 an seinem Unterende ergreifen und nach innen verbiegen kann, wodurch die Nase 41 aus der Eingriffsausnehmung 15, bzw. 15' herausgezogen und der Halterahmen 30 demzufolge aus der Rollenbahn 10 nach oben herausgehoben werden kann. Beim Einsetzen ist kein Werkzeug nötig, da sich die Schnappriegel 40 beim Einsetzen nach innen verbiegen, bis die Nase 41 in die Eingriffsausnehmung 15 bzw. 15' einrastet.

Am Boden 13 sind Zapfen 46 bis 49, insbesondere Stahlstifte nach oben ragend befestigt und zwar an solchen (im Raster angeordneten) Stellen, dass sie in Ausnehmungen 38 im Boden 36 der Halterahmen 30 inserieren, wenn die Schnappriegel 40 bzw. deren Nasen 41 in die Eingriffsausnehmungen 15, 15' der Rollenbahn 10 eingerastet sind. Durch den Eingriff der Zapfen 46 bis 49 mit den Ausnehmungen 38 der Halterahmen 30 werden die Halterahmen 30 in den Rollenbahnen 10 derart fixiert, dass Horizontalkräfte in Oberflächenrichtung des Cargo-Decks, auf welchem die Rollenbahn 10 montiert sind, an diesen Stellen aufgenommen werden. Die Schnappriegel 40 müssen also lediglich solche Kräfte aufnehmen, welche die Halterahmen 30 aus der Rollenbahn herausheben könnten. Gemäß der hier gezeigten bevorzugten Ausführungsformen wird jeder Halterahmen 30 durch zwei Schnappriegel 40 und vier Zapfen 46 bis 49 in der Rollenbahn 10 fixiert.

Aus Obigem geht hervor, dass gemäß der vorliegenden Erfindung die Kugelelemente 20 vorzugsweise gruppenweise in Halterahmen 30 montiert und so gemeinsam handhabbar sind. Die Befestigungseinrichtungen zum Fixieren der Halterahmen 30 in der Rollenbahn 10 sind derart im Raster vorgesehen, dass eine Vielzahl von Halterahmen 30 vorzugsweise dicht aneinander angrenzend zur Sicher-stellung gleicher Abstände der Kugelelemente 20 zueinander über längere Strecken hinweg montiert werden können. Die Montage und Demontage sind extrem einfach, so dass der immer wieder notwendige Umbau des Cargo-Decks zur Anpassung auf bestimmte Beförderungssituationen sowie Ersatzmontagen äußerst einfach erfolgen können.

### Bezugszeichenliste

- 1: Werkzeug
- 2: Floorbeams 2
- 10: Rollenbahn
- 11: Seitenwange
- 12: Seitenwange
- 13: Boden
- 15, 15': Eingriffsausnehmung
- 16: Befestigungsbohrung
- 20: Kugelelement
- 21: Kugel
- 22: Gehäuse
- 23: Halteflansch
- 24: Boden
- 30: Halterahmen
- 31: Montageabschnitt
- 32: 1. Rampenfläche
- 33: 2. Rampenfläche
- 34: 1. Seitenwange
- 35: 2. Seitenwange
- 36: Boden
- 37, 37': Zugangsöffnung
- 38: Ausnehmung
- 39: Befestigungsbohrung
- 40: Schnappriegel
- 41: Nase
- 42, 42': Befestigungsbohrung
- 43: Durchgriffsbohrung
- 46 - 49: Zapfen
- 50, 50': Montageöffnung

## Patentansprüche

1. Fördereinrichtung für ein Cargo-Deck eines Flugzeugs, umfassend
Rollenbahnen (10), insbesondere Rollenbahnen mit U-förmigem Querschnitt mit Seitenwangen (11, 12) und Boden (13), die an oder auf dem Cargo-Deck befestigbar sind,
Kugelelemente (20), die an den Rollenbahnen (10) befestigt sind, wobei die Kugelelemente (20) Gehäuse (22) umfassen, in welchem eine Kugel (21) allseitig drehbar gelagert ist, und
Halterahmen (30), in denen jeweils ein oder mehrere Kugelelemente (20) befestigbar sind und die an oder in den Rollenbahnen (10) befestigbar sind und die Verriegelungselemente (40/15) aufweisen zum lösbaren Fixieren der Halterahmen (30) an den Rollenbahnen (10), **dadurch gekennzeichnet, dass** die Halterahmen (30) in Längsrichtung gesehen mit kastenförmigem Querschnitt ausgebildet sind.

2. Fördereinrichtung nach Anspruch 1,
**dadurch gekennzeichnet, dass**
die Halterahmen (30) derart ausgebildet sind, dass die Kugelelemente (20) in einem Deckelabschnitt (31 - 33) der Halterahmen (30) befestigt sind und vorzugsweise zusätzlich auf einem Boden (36) der Halterahmen (30) aufstehen.

3. Fördereinrichtung nach einem der vorhergehenden Ansprüche,
**dadurch gekennzeichnet, dass**
die Verriegelungselemente Schnappriegel (40) umfassen, die an den Halterahmen (30) oder an den Seitenwangen (11, 12) befestigt sind und in Eingriffsausnehmungen (15, 15') an den Rollenbahnen (10) vorzugsweise an den Seitenwangen (11, 12) der Rollenbahnen bzw. an den Halterahmen (30) einrastbar sind.

4. Fördereinrichtung nach Anspruch 3,
**dadurch gekennzeichnet, dass**
eine Vielzahl von Eingriffsausnehmungen (15, 15') in vorzugsweise regelmäßigen Abständen in den Rollenbahnen (10) angeordnet sind.

5. Fördereinrichtung nach einem der Ansprüche 3 oder 4,
**dadurch gekennzeichnet, dass**
die Halterahmen (30) Zugangsöffnungen (37, 37') zum Öffnen der Schnappriegel (40) mittels eines Werkzeugs aufweisen.

6. Fördereinrichtung nach einem der vorhergehenden Ansprüche,
**dadurch gekennzeichnet, dass**
die Verriegelungselemente Zapfen (46 - 49) oder dergleichen Rastelemente an den Rollenbahnen (10) umfassen, an denen die Halterahmen (30) nach Einsetzen in die Rollenbahnen (10) gegenüber einer Verschiebung in Oberflächenrichtung des Cargo-Decks gesichert sind.

7. Fördereinrichtung nach Anspruch 6,
**dadurch gekennzeichnet, dass**
eine Vielzahl von Rastelementen (46 - 49) vorzugsweise in regelmäßigen Rastabständen an den Rollenbahnen (10) vorgesehen ist.

8. Fördereinrichtung nach einem der Ansprüche 6 oder 7,
**dadurch gekennzeichnet, dass**
die Rastelemente Stifte (46 - 49) umfassen, die im Boden (13) der Rollenbahnen (10) eingelassen sind und die in korrespondierende Ausnehmungen (38) in den Halterahmen (30) einsetzbar sind.

9. Fördereinrichtung nach einem der vorhergehenden Ansprüche,
**dadurch gekennzeichnet, dass**
die Rollenbahnen (10) und/oder die Halterahmen (30) als Extrusionsprofile ausgebildet sind.

## Claims

1. A conveying device for a cargo deck of an aircraft, comprising
roller tracks (10), in particular roller tracks of U-shaped cross-section with side walls (11,12) and a base (13), which can be fastened to or on the cargo deck,
ball elements (20) which are mounted on the roller tracks (10), wherein the ball elements (20) comprise housings (22) in which a ball (21) is mounted to be universally rotatable, and
retaining frames (30) in each of which one or more ball elements (20) can be mounted and which can be fastened on or in the roller tracks (10) and which have locking elements (40/15) for the releasable location of the retaining frames (30) on the roller tracks (10), **characterised in that** the retaining frames (30) are formed with a box-shaped cross-section, viewed in a longitudinal direction.

2. A conveying device unit according to Claim 1, **characterised in that** the retaining frames (30) are so formed that the ball elements (20) are secured in a cover portion (31-33) of the retaining frames (30) and, preferably, bear additionally on a base (36) of the retaining frames (30).

3. A conveying device unit according to any one of the preceding Claims, **characterised in that** the locking elements comprise snap-type latches (40) which are fastened to the retaining frames (30) or to the side walls (11,12) and can be located in engagement recesses (15,15') in the roller tracks (10), preferably in the side walls (11,12) of the roller tracks or in the retaining frames (30).

4. A conveying device unit according to Claim 3, **characterised in that** a plurality of engagement recesses (15,15") are provided in the roller tracks (10) at preferably regular distances apart.

5. A conveying device unit according to either Claim 3 or Claim 4, **characterised in that** the retaining frames (30) have access openings (37,37") for opening the snap-type latches (40) by means of an implement.

6. A conveying device unit according to any one of the preceding Claims, **characterised in that** the locking elements comprise studs (46-49) or like locating elements on the roller tracks (10), on which, after insertion into the roller tracks (10), the retaining frames (30) are secured in respect of displacement in the surface direction of the cargo deck.

7. A conveying device unit according to Claim 6, **characterised in that** a plurality of locating elements (46-49) are provided, preferably at regular locating distances apart on the roller tracks (10).

8. A conveying device unit according to either Claim 6 or Claim 7, **characterised in that** the locating elements comprise pins (46-49) which are let into the base (13) of the roller tracks (10) and which can be inserted into corresponding recesses (38) in the retaining frames (30).

9. A conveying device unit according to any one of the preceding Claims, **characterised in that** the roller tracks (10) and/or the retaining frames (30) are in the form of extruded sections.

## Revendications

1. Dispositif de transport pour une soute à cargaison d'avion, comprenant
des voies de roulement (10), notamment des voies de roulement de section transversale en U, avec des ailes latérales (11, 12) et un fond (13), aptes à être fixées à ou sur la soute à cargaison, des éléments à billes (20) fixés aux voies de roulement, lesdits éléments à billes (20) comprenant un logement (22), dans lequel une bille (21) est montée mobile en rotation dans toutes les directions, et
des cadres de maintien (30), dans chacun desquels peuvent être fixés un ou plusieurs éléments à billes (20) et pouvant eux-mêmes être fixés aux ou dans les voies de roulement (10), lesdits cadres de maintien (30) présentant des éléments de verrouillage (40/15) permettant leur fixation amovible aux voies de roulement (10),
**caractérisé en ce que** les cadres de maintien (30), vus dans la direction longitudinale, ont une section transversale en forme de caisson.

2. Dispositif de transport selon la revendication 1, **caractérisé en ce que** les cadres de maintien (30) sont conçus de telle sorte que les éléments à billes (20) sont fixés dans une portion de couvercle (31 à 33) des cadres de maintien (30) et reposent, de préférence et à titre complémentaire, sur un fond (36) des cadres de maintien (30).

3. Dispositif de transport selon l'une quelconque des revendications précédentes, **caractérisé en ce que** les éléments de verrouillage comprennent des doigts d'enclipsage (40) qui sont fixés aux cadres de maintien (30) ou aux ailes latérales (11, 12) et peuvent s'engager dans des évidements (15, 15') ménagés dans les voies de roulement (10), de préférence dans les ailes latérales (11, 12) desdites voies de roulement, ou dans les cadres de maintien (30).

4. Dispositif de transport selon la revendication 3, **caractérisé en ce que** plusieurs évidements (15, 15') sont ménagés dans les voies de roulement (10), de préférence à intervalles réguliers.

5. Dispositif de transport selon l'une quelconque des revendications 3 à 4, **caractérisé en ce que** les cadres de maintien (30) présentent des ouvertures d'accès (37, 37') permettant de dégager les doigts d'enclipsage (40) au moyen d'un outil.

6. Dispositif de transport selon l'une quelconque des revendications précédentes, **caractérisé en ce que** les éléments de verrouillage comprennent, au niveau des voies de roulement (10), des tétons (46 à 49), ou autres éléments d'encliquetage similaires, bloquant les cadres de maintien (30) en translation dans la direction de la surface de la soute à cargaison, une fois lesdits cadres de maintien insérés dans les voies de roulement (10).

7. Dispositif de transport selon la revendication 6, **caractérisé en ce qu'**une pluralité d'éléments d'encliquetage (46 à 49) est prévue de préférence à intervalles réguliers au niveau des voies de roulement (10).

8. Dispositif de transport selon la revendication 6 ou la revendication 7, **caractérisé en ce que** les éléments d'encliquetage comprennent des doigts (46 à 49) qui sont encastrés dans le fond (13) des voies de roulement (10) et peuvent s'engager dans des évidements complémentaires (38) que présentent les cadres de maintien (30).

9. Dispositif de transport selon l'une quelconque des revendications précédentes, **caractérisé en ce que** les voies de roulement (10) et/ou les cadres de maintien (30) consistent en des profilés d'extrusion.
